(19) Europäisches Patentamt
European Patent Office
Office européen des brevets

(11) Publication number: **0 088 566**
**A2**

(12) # EUROPEAN PATENT APPLICATION

(21) Application number: **83301010.1**

(22) Date of filing: **25.02.83**

(51) Int. Cl.³: **G 03 G 9/08**

(30) Priority: **09.03.82 JP 35728/82**

(43) Date of publication of application: **14.09.83**
**Bulletin 83/37**

(84) Designated Contracting States: **DE FR GB IT**

(71) Applicant: **KONISHIROKU PHOTO INDUSTRY CO. LTD.,**
**No. 26-2, Nishishinjuku 1-chome Shinjuku-ku,**
**Tokyo 160 (JP)**

(72) Inventor: **Yamazaki, Hiroshi, No. 1246-8, Takaishi**
**Tama-Ku, Kawasaki-Shi 215 Kanagawa-Ken (JP)**
Inventor: **Tokitou, Kouji, No. 2116-1, Harara-Machi,**
**Kagoshima-Shi, 890 (JP)**

(74) Representative: **Burnside, Michael et al, c/o Michael**
**Burnside & Partners 2 Serjeants' Inn Fleet Street,**
**London EC4Y 1HL (GB)**

(54) **Microcapsule toner.**

(57) A microcapsule toner comprising colored particles wherein a liquid or soft solid core material is confined in a capsule, exhibits good strength, does not from an agglomerate and can be produce simply, when the capsule walls are made from a polyurethane or a polyurea resin.

EP 0 088 566 A2

# MICROCAPSULE TONER

The present invetion relates to a toner for use in development of an electrostatic latent image, and more particularly, to a microcapsule toner for providing a toner image that can be fixed by pressure.

In electorphotography, electrostatic printing or electrostatic recording, an electrostatic latent image is formed on the basis of video information and developed with a torner to produce a toner image, which is usually transferred to a receiving sheet and fixed thereon to provide a visible image.

The conventional toner for use in development of an electrostatic latent image typically consists essentially of fine particles of a dispersion of a colorant such as carbon black in a thermoplastic resin binder. If the toner is of a two-component type, is is agitated with a carrier such as iron powder or glass beads, and if it is a one-component toner containing fine magnetic particles, it is agitated alone. In either case, triboelectrification takes place and the resulting electrostatic force develops the latent image to a toner image, which is usually transferred to a receiving sheet and fixed thereon with heated rollers. However, during the triboelectrification process, the toner particles are comminuted by the agitating action, and the resulting toner dust either produces a visible image of low quality or necessitates early toner replacement. Furthermore, heating the fixing apparatus to the predetermined temperature

requires a long time, as well as much energy. Paper getting stuck in the machine presents a potential fire hazard, and reliable fixing calls for considerably strict requirements for temperature to be satisfied.

Under these circumstances, active studies are being made on the use of microcapsules as toners for development of electrostatic latent images. The microcapsule toner comprises colored particles each made up of a resinous microcapsule containing a liquid or soft solid core material. The toner image formed by this toner is placed under the load of pressure rollers to have the capsule ruptured and release the core material to be fixed to a receiving sheet. Since this fixing process requires no heating, the problems involved in fixing with heated rollers are substantially solved. Nevertheless, the conventional microcapsule toner has its own defects. For example, Japanese Patent Application (OPI) (the symbol OPI as used herein means an unexamined published Japanese patent application) No. 76233/79 discloses a microcapsule toner having a wall membrane made of polyamide resin. Since the wall membrane is not very strong, drying necessary for producing a powder comprising discrete toner particles must be effected by spray-drying. In addition, the need to avoid vigorous agitation results in insufficient triboelectrification and static buildup, which only provides a visible image of low density. As a further disadvantage, the polymerization reaction for producing the polyamide forming the toner capsule must be effected at elevated temperatures, so if fine magnetic particles are incorporated in the capsule to make a magnetic toner, they are attacked by hydrochloric acid formed from the polyvalent acid chloride that is also present in the particle. This of course is detrimental to the desired characteristics of the toner. As is typically illustrated by this example, the ocnventional microcapsule toners have various problems with respect to their properties and manufacture, and none of them is completely satisfactory for practical applications.

Therefore, a general object of the present invention is to provide a microcapsule toner which is strong, does not form an agglomerate and can be produced simply.

This object can be achieved by a toner comprising colored particles wherein a liquid or soft solid core material is confined in a capsule made of at least one resin selected from among a polyurethane resin and a polyurea resin.

The capsule of the microcapsule toner of the present invention is made of a polyurethane resin, for example, a resin forming a polymer through a urethane bond produced by reaction between a polyisocyanate and, a polyol, or a polyurea resin, for example, a resin forming a polymer through a urea bond produced by reaction between a polyisocyanate and a polyamine. This capsule has confined therein a liquid and/or soft solid core material to form an individual particle. A colorant is incorporated within the wall membrane of the capsule and/or the core material, and preferably within the core material. In this

preferred case, part of the colorant may be present within the wall membrane.

Suitable examples of the polyisocyanate for use in the preparation of the resinous capsule are listed below:

1) Hexamethylene diisocyanate

$OCN(CH_2)_6OCN$

commerical product: "Desmodur H" of Sumitomo Bayer Urethane Industry Co., Ltd.

2)

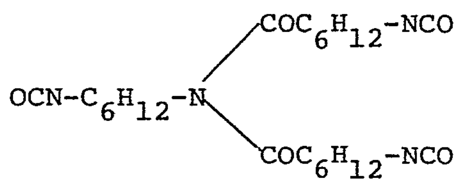

commerical product: "Desmodur N" of Sumitomo Bayer Urethane Industry Co., Ltd.

3) Methaphenylene diisocyanate

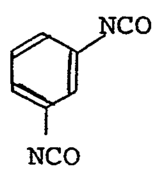

commercial product: "Naphconate" of National Aniline Corporation

4) Toluylene isocyanate

mixture of

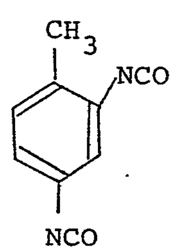

and

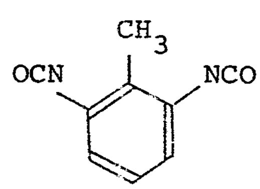

commerical products: "Desmodur T" of Sumitomo Bayer Urethane Industry Co., Ltd.

"Hyrene TM" of E.I. du Pont de Nemours

5) 2,4-Tolylene-diisocyanate

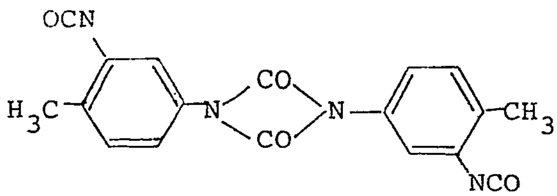

commercial product: "Desmodur T" of Sumitomo Bayer Urethane Industry Co., Ltd.

6) Reaction product of toluylene isocyanate and trimethylolpropane

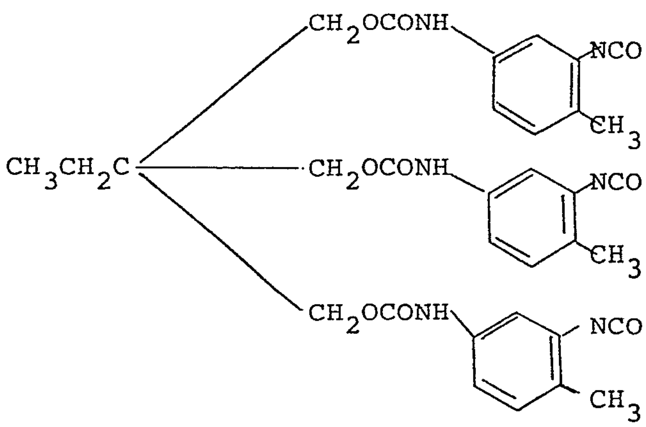

commercial products: "Desmodur L" of Sumitomo Bayer Urethane Industry Co., Ltd.;
"Colonate L" of Nippon Polyurethane Industry Co., Ltd.

7) 3,3'-Dimethyl-diphenyl-4,4'-diisocyanate

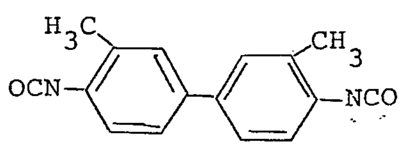

commerical product: "Hyrene H" of E.I. du Pont de Nemours

8) Diphenylmethane-4,4'-diisocyanate

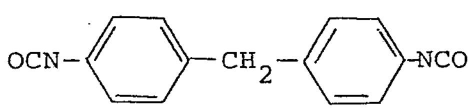

commercial product: "Milionate MT" of Nippon Polyurethane Industry Co., Ltd.

9) 3,3'-Dimethyl-diphenylmethane-4,4'-diisocyanate

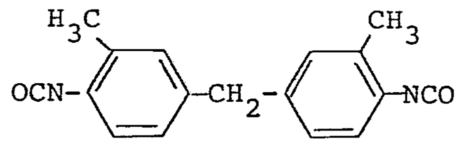

commercial product: "Hyrene DMM" of E.I. du Pont de Nemours

10) Triphenylmethane-triisocyanate

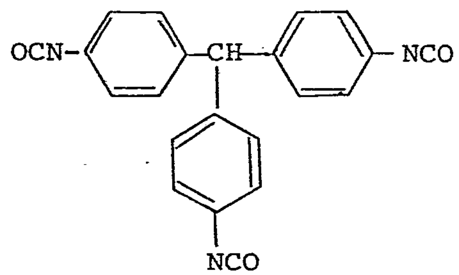

commercial product: "Desmodur R" of Sumitomo Bayer Urethane Industry Co., Ltd.

11) Polymethylenephenyl isocyanate

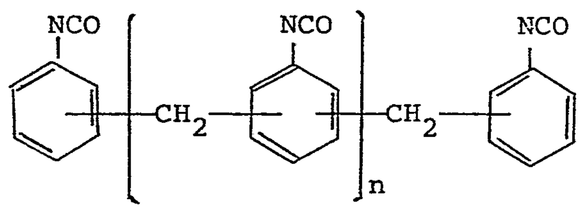

commerical product: "Milionate MR" of Nippon Polyurethane Industry Co., Ltd.

12) Naphthalene-1,5-diisocyanate

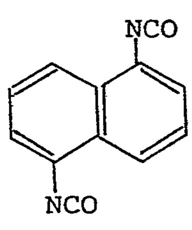

commerical product: "Desmodur 15" of Sumitomo Bayer Urethane Industry Co., Ltd.

Illustrative polyols that react with these polyisocyanates to form polyurethane resins include diols such as ethylene glycol, propylene glycol, butylene glycol and hexamethylene glycol; triols such as glycerin, trimethylolpropane, trimethylolethane, and 1,2,6-hexanetriol; pentaerythritol and water.

Illustrative polyamines that react with those polyisocynates to form polyurea resins include ethylenediamine, hexamethylenediamine, diethylenetriamine, iminobispropylamine, phenylenediamine, xylenediamine and triethylenetetramine.

The core in the capsule is made of a liquid or soft solid material containing a colorant. Any liquid or soft solid material can be used if it has fluidity or plasticity, and those having a viscosity of 100,000 to 1,000,000 cps at 60°C are preferred. Illustrative liquid or soft solid materials are liquid polybutene, liquid polychloroprene, liquid polybutadiene, epoxidized soybean oil, epoxidized triglyceride, epoxidized monoesters, polyesters of adipic acid, liquid polyesters, chlorinated paraffin, trimellitic acid esters, silicone oil, mineral oils, poly(methylacrylate), poly(butyl acrylate), poly(butyl methacrylate), poly(lauryl methacrylate), acrylate ester oligomers, styrene monomer oligomers, styrene-alkyl acrylate copolymer oligomers, styrene-alkyl methacrylate copolymer oligomers, polyvinyl acetate, petroleum residues such as asphalt and gilsonite, esters of unsaturated aliphatic acids such as linolic acid, linolenic acid, oleic acid, elaidic acid, eleostearic acid, linolenelaidic acid, gadoleic acid, erucic acid, arachidonic acid, curpanodonic acid and α-licanic acid,

drying or semi-drying vegetable oils such as soybean oil, linseed oil, perilla oil, tung oil, castor oil, hempseed oil, kapok oil, poppy seed oil, sesame oil, rice bran oil, safflower oil, corn oil, rape oil, sunflower oil and cotton seed oil, and synthetic drying oils such as acetylenebutadiene copolymer and dicyclopentadiene oligomer (e.g. "Quinton" of The Japanese Geon Co., Ltd.).

The core contains a colorant. When the microcapsule toner to be produced is a one-component toner, all or part of the colorant is made of fine magnetic particles. Suitable colorants are carbon black, nigrosine dye (C.I. No. 50415B), aniline blue (C.I. No. 50405), chalcooil blue (C.I. No. azoec Blue 3), chrome yellow (C.I. No.14090), ultramarine blue (C.I. No.77103), du Pont oil red (C.I. No.26105), quinoline yellow (C.I. No.47005), methylene blue chloride (C.I. No.52015), phthalocyanine blue (C.I. No.74160), malachite green oxalate (C.I. No.42000), lamp black (C.I. No.77266), rose bengal (C.I. No.45435), and mixtures thereof. These colorants should be present in sufficient amounts to form an image of adequate density, and preferably they are contained in an amount of about 1 to 20 parts by weight per 100 parts by weight of the liquid or soft solid material.

Examples of the magnetic material that may replace part or all of the colorant include ferrite, magnetite and other compounds that contain ferromagnetic elements such as iron, cobalt and nickel; alloys which do not contain ferromagnetic elements but which exhibit ferromagnetism upon suitable heat treatment, such as Heusler's alloys containing manganese and

copper (e.g. Mn-Cu-Al and Mn-Cu-Sb); and chromium dioxide. These magnetic materials are uniformly dispersed in the liquid or soft solid material in the form of fine particles having an average size of 0.1 to 1 micron. They are contained in an amount of 20 to 70 parts by weight, preferably from 40 to 70 parts by weight, per 100 parts by weight of the toner.

The microcapsule toner of the present invention may advantageously be produced by the following procedure. A mixture of the liquid and/or soft solid material, colorant and polyisocyanate is charged into a dispersion medium made of water containing a suitable dispersion stabilizer. By agitation or like means, the mixture is divided into fine particles which are suspended in the dispersion medium. At a controlled reaction temperature, a polyol or polyamine is added to the system which is agitated until the end of the reaction. The resulting solids are filtered out and dried to produce a microcapsule toner.

The particle size of the toner can be controlled by controlling the size of the fine particles of the mixture of liquid and/or soft solid material, colorant and polyisocyanate in the reaction system. This can be achieved by controlling the agitating force while the size of said fine particles and the degree of their dispersion are monitored with a microscope or like means. A suitable liquid and/or soft solid material is one which is hardly soluble in water and dissolves or is highly miscible with the polyisocyanate with which said material and colorant are to be mixed. The colorant may be dispersed in the liquid and/or soft solid material and polyisocyanate by means of a ball mill

or attritor, and it is preferred that the colorant be pretreated with a silane or titanium coupling agent. The mixture of liquid and/or soft solid material, colorant and polyisocyanate can be dispersed in the dispersion medium by mechanical agitation with a homomixer or whirling blender, or by ultrasonic waves. In practical applications, a dispersion stabilizer must be present in the dispersion medium to keep the mixture highly suspended throughout the polymerization process.

Examples of the dispersion stabilizer include water-soluble polymers such as gelatin, gelatin derivatives, polyvinyl alcohol, poly(styrene-sulfonic acid), hydroxymethyl cellulose, hydroxyethyl cellulose, hydroxypropyl cellulose, sodium carboxymethyl cellulose, and poly(sodium acrylate); surfactants such as anionic surfactants, nonionic surfactants and cationic surfactants; and hydrophilic inorganic colloidal materials such as colloidal silica, alumina, tricalcium phosphate, ferric hydroxide, titanium hydroxide and aluminum hydroxide. These dispersion stabilizers may be used in combination with themselves or suitable aids. While there is no particular limitation on the particle size of the microcapsule toner of the present invention, its average particle size is generally from 5 to 50 microns, preferably from 5 to 30 microns.

When the microcapsule toner of the present invention contains fine magnetic particles, it can be used as a developer either directly or after mixed with a carrier such as iron powder or glass beads. For developing an electrostatic latent image, the toner is agitated to cause triboelectrification.

Since the toner is surrounded by a wall membrane made of a polyurethane or polyurea resin having great durability to friction, it will not be crushed when it is subjected to sufficient agitation to provide an adequate amount of static charge, and as a result, a visible image having satisfactorily high density can be produced. Furthermore, the polyurethane or polyurea resin forming the capsule is insensitive to moisture, so the individual toner capsules or particles do not agglomerate and will instead remain highly flowable over an extended period. In this respect, the toner of the present invention can be effectively used to develop an electrostatic latent image and provide a visible image of consistently good quality.

The toner of the present invention easily ruptures when it is given a linear pressure of 10 to 30 kg/cm with a pressure roller although the exact value varies with the thickness of the wall membrane and the toner particle size. Therefore, by using such pressure roller as a fixing apparatus, the toner image can be readily fixed on its supporting sheet, usually receiving paper. When the capsule ruptures, the core is released. Since this core is made of a liquid and/or soft solid material containing a colorant, it has not only high visibility but also sufficient fluidity or plasticity to penetrate or be forced between fibers of the receiving paper. In consequence, the toner iamge is satisfactorily fixed without sacrificing its resolution.

The microcapsule toner of the present invention has the following additional advantages. First of all, it is surrounded

by a wall membrane made of a strong polyurethane or polyurea resin, so discrete particles can be recovered from a liquid dispersion by conventional filtration and drying means without any adverse effect. Secondly, the polyurethane (polyurea) resin can be formed by reacting a polyisocyanate with a polyol (polyamine) at room temperature or temperatures slightly higher than room temperature. For these two reasons, the microcapsule toner of the present invention can be produced with particular advantage and at a very low cost by interfacial polymerization which is a modification of the suspension polymerization and wherein the component of the individual particles suspended in a dispersion medium is reacted with the component of the dispersion medium at their interface to thereby form a resinous membrane. This method permits the use of inexpensive and harmless water as a dispersion medium and provides essentially spherical particles. Furthermore, the liquid and/or soft solid material and colorant may be initially mixed with only polyisocyanate as a material for the toner capsule (wall membrane), so neither the colorant nor the fine magnetic particles in the mixture will be attacked by acid. Therefore, a toner having the intended properties can be reliably produced by the interfacial polymerization process.

The microcapsule toner of the present invention is now described in greater detail by reference to the following examples which are given here for illustrative purposes only and are by no means intended to limit the scope of the invention.

Example 1

A highly flowable mixture was prepared by blending the following ingredients under agitation.

| | |
|---|---|
| Liquid material: dibutyl phthalate | 80g |
| Fine black magnetic particles: tri-iron tetroxide | 100g |
| Dispersant: lecithin | 1g |

To the mixture, 20 g of a polyisocyanate (Desmodur L-75 of Sumitomo Bayer Urethane Industry Co., Ltd.) was added to form a uniform dispersion, which was added dropwise to 800 ml of water containing 10 g of colloidal silica in a stirrer rotating at 8,000 r.p.m. which was so controlled as to provide fine particles of a size between 5 and 20 microns. To the dispersion, 100 ml of an aqueous solution containing 5 g of ethylenediamine was added dropwise, and the mixture was stirred at 300 r.p.m. for 5 hours. The solid particles were filtered out and dried to provide a sample of the microcapsule toner of the present invention having an average particle size of 15 microns. This sample was taken as Sample No. 1.

Example 2

Sample No.2 of the microcapsule toner of the present invention was prepared as in Example 1 except that Desmodur L-75 as a polyisocyanate was replaced by Desmodur N-75 of Sumitomo Bayer Urethane Industry Co., Ltd. and the ethylene diamine (polyamine) by hexamethylene diamine.

Example 3

Sample No.3 of the microcapsule toner of the present invention was prepared as in Example 1 except that the ethylenediamine was replaced by ethylene glycol (polyol).

Example 4

Sample No.4 of the microcapsule toner of the present invention was prepared as in Example 1 except that Desmodur L-75 as a polyisocyanate was replaced by Desmodur N-75 and the ethylenediamine (polyamine) by ethylene glycol (polyol).

Comparative Example 1

When the procedure of Example 1 described in Japanese Patent Application (OPI) No.76233/79 was repeated by substituting filtration for spray-drying, discrete particles could not be recovered from the dispersion since they agglomerated during the filtration. As a result, no desired microcapsule toner comprising discrete particles could be produced.

Comparative Example 2

A mixture of 100 g of an ethylene-vinyl acetate copolymer and 100 g of a tri-iron tetroxide (as fine black magnetic powder) was fused and kneaded in a two-roll mill, and ground into particles of a comparative toner having an average size of 15 microns. This comparative sample No.1 was less flowable than Samples Nos. 1 to 4.

Experiment

Samples Nos. 1 to 4 were tested for the fixability of the toner images produced by development with these toners as against comparative sample No.1. The testing procedure was as follows: each sample was set in the developer unit of a modified electrophotocopier U-Bix T of Konishiroku Photo Industry Co., Ltd. to develop an electrostatic latent image, and the resulting toner image was transferred to plain paper

and fixed thereon with a pressure fixing unit (linear pressure: 15 kg/cm). The visible images were rubbed with a plastic eraser. There was little change in the density of the images produced by development with Samples Nos. 1 to 4, but the density of the image produced by comparative sample No.1 was greatly reduced.

Example 5

A toner sample of the present invention was prepared as in Example 1 except that the fine black magnetic powder and lecithin were replaced by 7 g of acidic carbon black ("MA-8" Mitsubishi Chemical Industries Limited). A developer was prepared by mixing 5 parts by weight of the toner and 100 parts by weight of an iron powder carrier (av. size: 70-90 μ) coated with a styrene-acrylic resin. This developer was used to form an image with an electrophotocopier U-Bix V of Konishiroku Photo Industry Co., Ltd. modified to effect pressure fixing. The image could be satisfactorily fixed without print-through.

CLAIMS:

1. A toner for development of an electrostatic latent image which comprises a capsule whose wall is formed of at least one resin and a liquid or soft solid core confined in said capsule characterized in that said resin forming the capsule wall comprises a polyurethane and/or a polyurea resin.

2. A toner according to Claim 1, characterized in that said polyurethane resin is a polymer produced by reaction of a polyisocyanate with a polyol.

3. A toner according to Claim 1, characterized in that said polyurea resin is a polymer produced by reaction of a polyisocyanate with a polyamine.

4. A toner according to any preceding Claim, characterized in that said core material has a viscosity of from 100,000 to 1,000,000 cps. at 60°C.

5. A toner according to any preceding Claim, characterized in that said core material further comprises a coloring agent.

6. A toner according to Claim 5, characterized in that said coloring agent is carbon black.

7. A toner according to any preceding Claim, characterized in that said core material further comprises a magnetic material.